Europäisches Patentamt

European Patent Office

Office européen des brevets

(19)

(11) Publication number: **0 017 299**
**B1**

# EUROPEAN PATENT SPECIFICATION

(12)

(45) Date of publication of patent specification: **01.12.82**

(51) Int. Cl.³: **B 25 B 27/00, B 23 P 19/08**

(21) Application number: **80200294.9**

(22) Date of filing: **28.03.80**

(54) Method and apparatus for installing a sealing ring.

(30) Priority: **29.03.79 NL 7902473**

(43) Date of publication of application:
**15.10.80 Bulletin 80/21**

(45) Publication of the grant of the patent:
**01.12.82 Bulletin 82/48**

(84) Designated Contracting States:
**AT BE CH DE FR GB IT LU NL SE**

(56) References cited:
**DE - A - 2 312 787**
**FR - A - 2 270 998**
**FR - A - 2 396 627**
**US - A - 3 455 011**
**US - A - 4 091 521**
**US - A - 4 148 125**

(73) Proprietor: **WAVIN B.V.**
**251 Händellaan**
**NL-8031 EM Zwolle (NL)**

(72) Inventor: **Olderaan, Wilhelmus F.T.C., Mr.**
**16 Lijsterbeslaan**
**NL-7771 Hardenberg (NL)**

(74) Representative: **van der Veken, Johannes Adriaan**
**et al,**
**EXTERPATENT Postbus 90649 Willem**
**Witsenplein 3 & 4**
**NL-2509 LP 's-Gravenhage (NL)**

Courier Press, Leamington Spa, England.

## Process for installing a sealing ring and apparatus
## for executing said process

The invention relates to a process and apparatus for installing a sealing ring in an annular groove chamber in a cylindrical part, wherein the sealing ring is inwardly deformed thereby decreasing its outer diameter, whereafter the deformed sealing ring is pushed into the cylindrical part and the deformation is subsequently terminated so that the sealing ring is received and left in a groove chamber.

Such a process and an apparatus for executing this process is known from FR—A—2.396.627 wherein a sealing ring is inwardly deformed in order to decrease its outer diameter whereafter the deformed ring is positioned opposite a groove chamber in a cylindrical bore of a hydraulic tool. Subsequently the deformation is terminated so that the sealing ring will be accommodated in the groove chamber.

For the deformation a rodlike sealing ring deforming member is able to press a part of the sealing ring through an opening between two opposite supporting end surfaces of a horseshoe support.

A similar process and device for executing this process is known from US—A—4.091.521. For the inward deformation of the sealing ring to be installed in a groove chamber of a bore, the apparatus comprises a core and two arms which are rotatable outwardly in opposite directions with respect to the core so that the lower part of the sealing ring will be drawn onto the part of the sealing ring engaging the core.

US—A—3.455.128 describes a tool for inserting a sealing ring in a groove chamber in a bore of a hydraulic device comprising two pivotally connected arms, one arm carrying a horseshoe like supporting surface with an inner recess for receiving a deformed part of a sealing ring. For the deformation the other arm is movable into said recess along two opposite free end surfaces of the horseshoelike supporting surface.

At last FR—A—2.270.998 also discloses a method and device for installing a sealing ring in a groove chamber of a bore.

The apparatus comprises a plurality of supporting pins and a sealing ring deforming member being able to pass between two opposite supporting pins so that a sealing ring can be deformed inwardly.

The deformed sealing ring is able to regain its original form by withdrawing the supporting pins, which is effected after having positioned the sealing ring opposite the groove chamber.

If these processes are used for installing a sealing ring in a groove chamber of a socket of a plastics pipe it often occurs that the sealing ring is not sufficiently retained in the groove chamber during transport of such plastics pipes from the plant where the sealing ring is installed and the installation site where the pipes are used. This holds the more if the sealing ring is provided with lubricating agent in the plant. This insufficient retaining is particularly due to the fact that groove chambers in plastics sockets are rather swallow contrary to the rather sharp edged groove chambers in metal. These differences in the groove chambers are caused by the different ways of forming the groove chambers, in a plastics socket by deforming a plasticized socket and in a metal by cutting.

Another disadvantage is that the deformed sealing ring is not always exactly positioned opposite the groove chamber.

It is now the aim of the invention to provide a process for overcoming these disadvantages.

This aim is attained in that the sealing ring is received and left in a groove chamber in a socket end of a pipe and a supporting ring is slid below the sealing ring.

By sliding a supporting ring below the sealing ring the risk of undesired removal of the sealing ring from a groove chamber in a plastics socket is completely prevented.

The sealing ring is preferably provided with lubricant as this lubricant is protected against dirt by the supporting ring, this is very advantageous as until now the lubricant had to be applied at the installation site by skilled people which is very expensive. In this respect it should be noted that manually applying lubricating agents often leads to an uneven distribution of the lubricating agent over the sealing ring so that the sealing ring may be pushed out of the groove chamber during penetration of a male part in the socket so that an insatisfactory seal is obtained.

In a very preferred embodiment inwardly deformed opposite parts of the sealing ring are pressed against each other thereby reducing the total thickness of said opposite parts.

This allows to maintain a very well defined position of the deformed sealing ring during its movement into the socket so that the sealing ring will be exactly installed in the groove chamber. This is very important as it is otherwise difficult to install the supporting ring exactly below the sealing ring.

A well defined position of the deformed sealing ring is improved by tightening or stretching the sealing ring across two opposite support surfaces at both sides of the deformation and another support surface by rotation of the two opposite support surfaces.

The invention also relates to an apparatus for executing the process of the invention having a sealing ring retaining member comprising a sealing ring deforming member and supporting means for maintaining a sealing ring in its inwardly deformed position and means for moving the deforming member from an inactive position into an active position and reverse between opposite supporting means, which is characterized in that the apparatus comprises a supporting ring applying member, and a pipe socket retaining member.

The invention will now be illustrated with respect to an embodiment in the drawing, wherein:

Fig. 1 is a schematic view of an apparatus according to the invention;

Fig. 2 is a cross-section of a sealing ring and a supporting ring supporting member;

Fig. 3 is a sealing ring prior to its impression;

Fig. 4 is a sealing ring in a shape directly after its impression by means of an impressing member;

Fig. 5 shows the manner in which an impressing member has been removed, whilst

Fig. 6 is an impressed sealing ring in the position as pushed into a socket end;

Fig. 7 is a completed socket end comprising a sealing ring and a supporting ring.

Fig. 8a is a part of another embodiment of an apparatus according to the invention;

Fig. 9a is a front view of the apparatus of fig. 8;

Fig. 10a is a part of still another embodiment of apparatus according to the invention;

Fig. 11a is a cross section according to line IX—IX;

Fig. 12a is a part of another embodiment of apparatus of the invention;

Fig. 13a is a front view of the apparatus according to fig. 12.

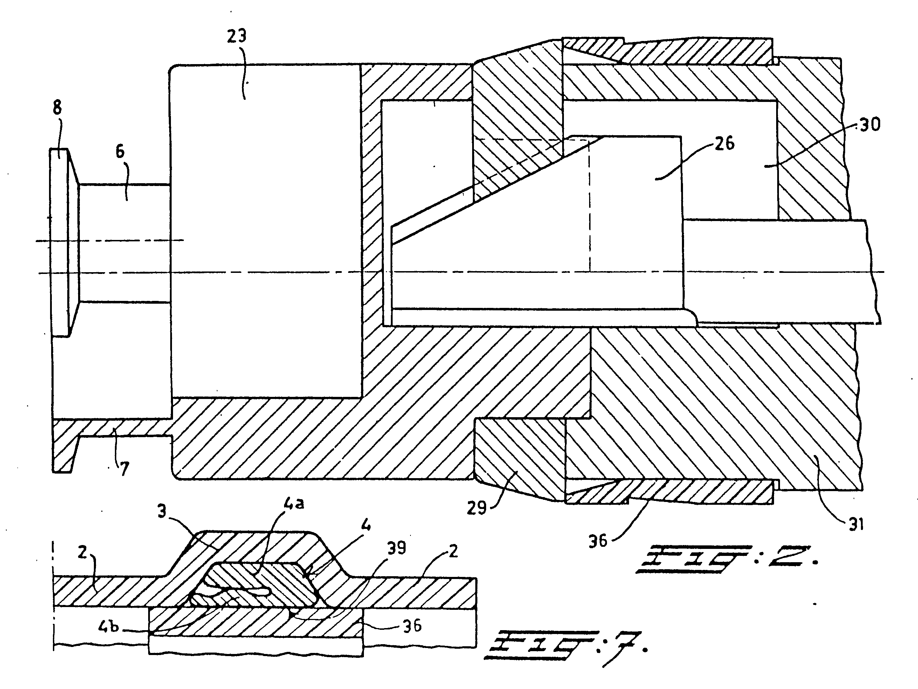

Fig. 1 shows a very schematic view of an apparatus according to the invention for installing a sealing ring 4 in a groove chamber 3 of a socket end 2 of a plastics pipe part 1. In this case the annular groove chamber has previously been formed in the socket end 2. A pipe retaining member 15 being attached to a frame 16 of the apparatus, serves for retaining the pipe part 1.

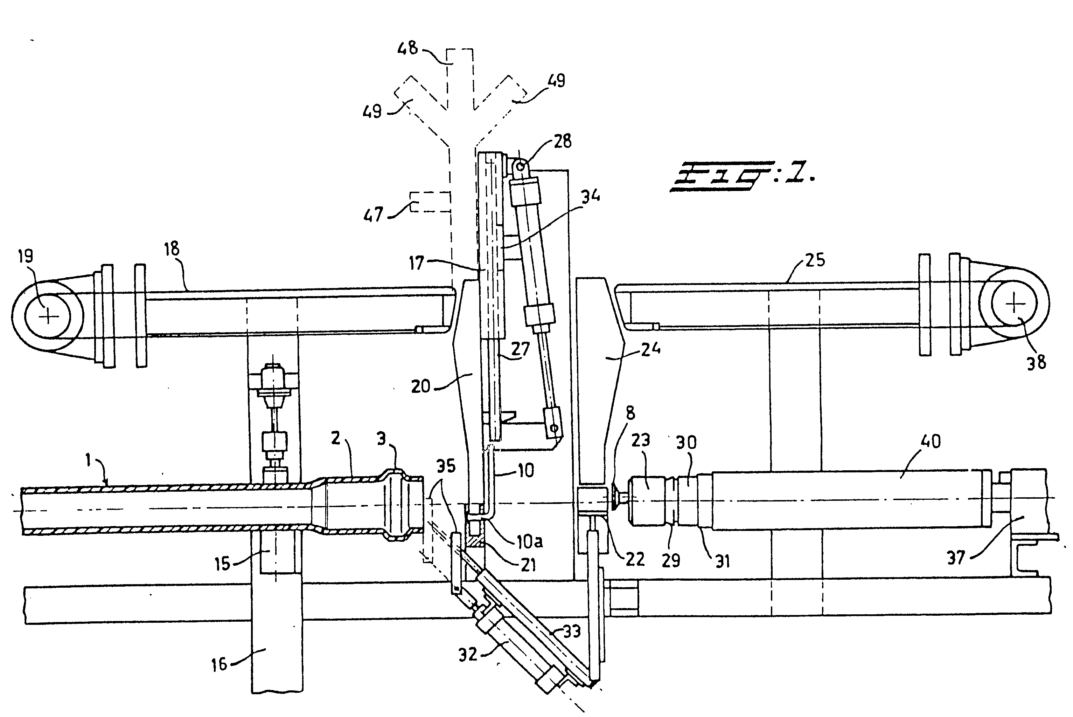

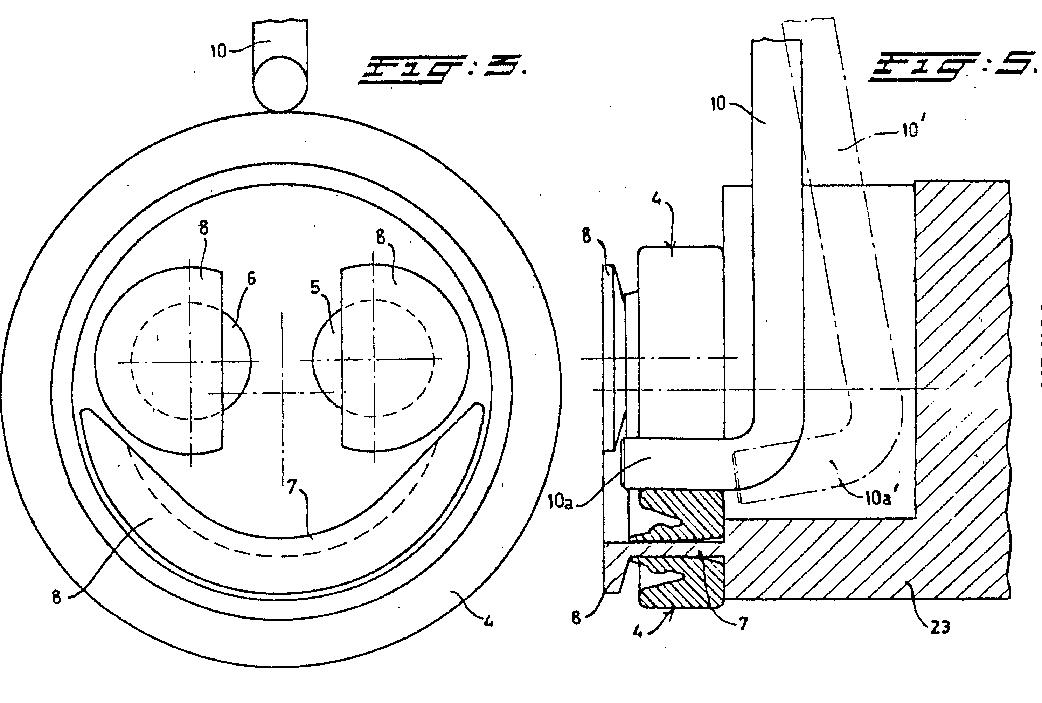

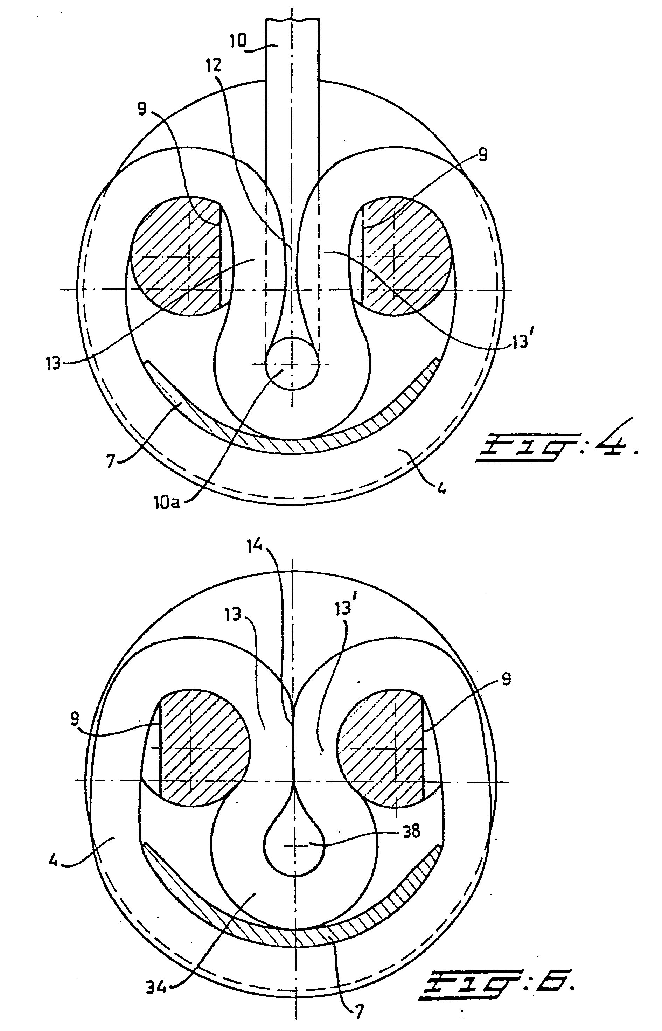

The apparatus further comprises a sealing ring-retaining member being provided with a rotatable axle 5, a rotatable axle 6 and a stationary curved wall part 7. Both the axles 5 and 6 each comprise flat sides 9, which may be located opposite one another, as shown in fig. 4.

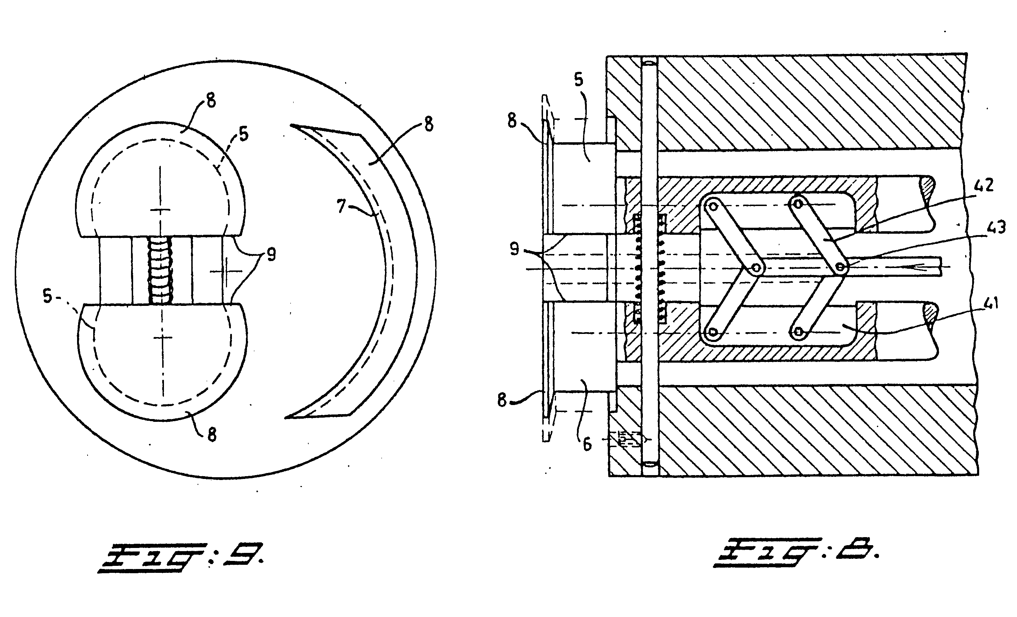

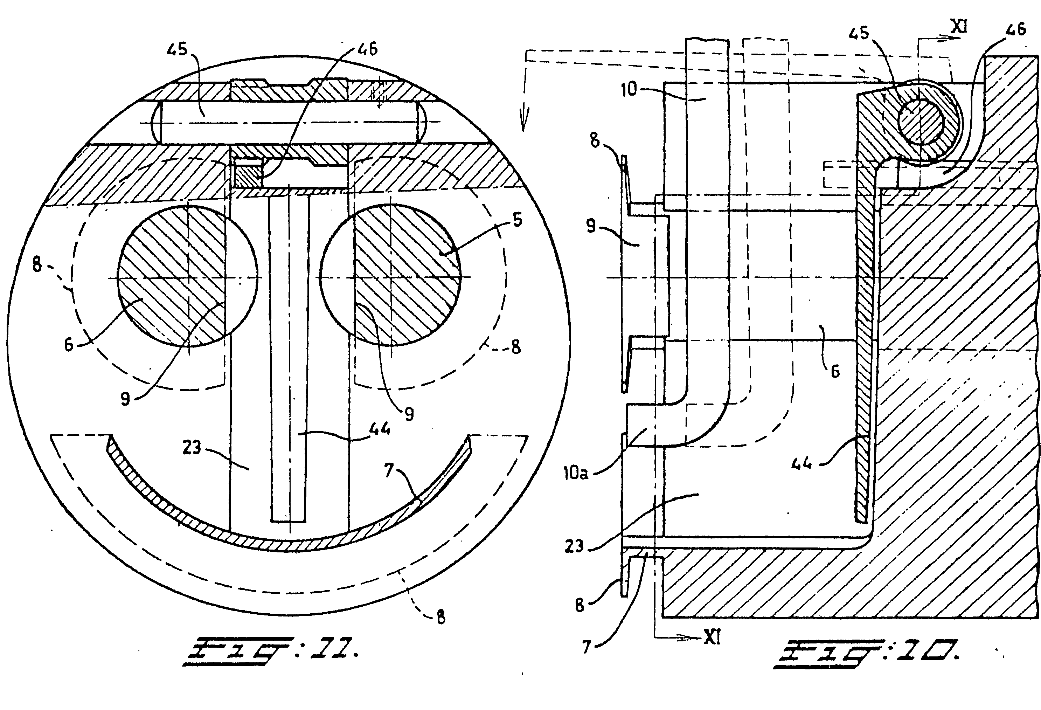

When the rotatable axles 5 and 6 have obtained the position as shown in fig. 6, the flat sides 9 are located the most remote from one another, although they extend parallel with one another.

As can be seen, the periphery formed by the curved wall part 7 and the outer circumference of the axles 5 and 6 is smaller than the inner circumference of the sealing ring in an undeformed form.

The apparatus in accordance with the invention is further provided with a deforming member 10, which comprises a vertical part 10, and a part 10a, extending from part 10 under a straight angle, said part 10a running parallel with the axis of the pipe retaining device 15 for retaining pipe part 1.

Figure 2 clearly shows that portion 10a will deform the sealing ring 4 between two opposite faces 9 of the rotatable axles 5 and 6 and will push said impression farther inwardly until the sealing ring adjoins the inside of the curved wall part 7.

During said pushing towards the interior, an opening 12 may remain between the wall parts 13 and 13' of the deformation of the sealing ring.

Subsequently the axles 5 and 6 comprising coarse surfaces are rotated, such that the flat sides 9 come to lie more remote from one another, which will cause the parts 13 and 13' of the impressed portion of the sealing ring to be pressed against one another; the distance between the rotatable axles 5 and 6 at the location of part 14, is smaller than twice the thickness of the sealing ring 4 when being undeformed.

In order to remove the axially extending portion 10a of the deforming member 10, the arm 10 may be subjected to a pivotal movement, thus causing the deforming member to regain the position as shown in fig. 5, by the numerals 10' and 10a'.

In order to perform said pivotal movement of the deforming member 10, a pivot 28 is present between a pin 27 and a guide and a friction plate 34 in the guide of pin 27.

So as to supply sealing rings 4, the apparatus according to the invention may comprise an endless belt 18 driven by means of a drive mechanism 19. A ring 4 disposed upon belt 18 will fall into the supply container 20 from which the sealing ring may be located upon the support 21. A mandrel 40 may be conveyed by means of a gear 37, subsequently allowing the sealing ring supporting assembly, comprising the rotatable axles 5 and 6 and the curved wall part 7, to receive the sealing ring 4.

Hereupon the sealing ring 4 is given the position as shown in fig. 6 by means of the impression member 10 and the axles 5 and 6.

The mandrel is subsequently displaced in the socket end 2 in such a manner that the sealing ring 4 is positioned opposite the groove chamber 3.

The axles 5 and 6 will then rotate backwards, so that the sealing ring 4 will retain its original position as shown in fig. 3, which will allow said sealing ring 4 to be received in the groove chamber 3 and to remain in said groove chamber 3.

So as to effectively protect a sealing ring with a lubricating agent applied thereupon, against the action of dust or dirt, a supporting ring 36 is advantageously provided below the sealing ring 4, while sealing off the groove chamber and the sealing ring accommodated therein. When a male pipe part is pushed into a socket end, the supporting ring 36 in the socket end will be slid forward towards the pipe part 1.

In order to install said supporting ring 36, an endless belt 25 may be provided which is driven by a drive 38.

On reversing the endless belt 25, a supporting ring 36 will arrive in the guide 24 and from thereon upon support 22.

In order to likewise accommodate said supporting ring 36 in the socket end 2, the mandrel 40 comprises a first mandrel part 30 with an abutment edge 31 upon which the supporting ring 36 is slid. After having slid the supporting ring 36 upon the mandrel part 30, a conical part 26 will expand equidistant circumferential conically extending expandable parts 29 towards the exterior, until the largest circumference of said expandable parts 29 will at least correspond with the circumference of the mandrel part 30, and more preferably with an outer circumference corresponding with that of the supporting ring 36.

In between the outwardly expandable parts 29 and the sealing ring supporting assembly 6, 5, 7, a second mandrel part 23 has a diameter being smaller than or equal to the inner diameter of the supporting ring 36.

After a supporting ring 36 has been disposed upon a support 22 through the guide 24, the level of said support being adapted by means of a suitable mechanism, the mandrel 40 is moved to the left (vide fig. 1) so that the supporting ring 36 is received upon the first mandrel part 30, until said supporting ring 36 abuts against the abutment edge 31.

During a subsequent second stage, the sealing ring 4 is applied upon the supporting assembly 5, 6, 7 through guide 20. When the sealing ring is pushed into the socket end 2 and said ring has attained its desired position, the deformation of the ring will be terminated (see Figure 6) at the moment that said sealing ring 4 is positioned opposite the annular groove chamber 3, so that the sealing ring may then be received in said groove chamber 3.

When the mandrel 40 is further displaced, the first mandrel portion 30 will move below the ring 4, thus causing said ring 4 to arrive upon the tapering expandable parts 29, which provide an easy displacement of the supporting ring 36 underneath the sealing ring 4.

After having reached its final position, to wit the position of the supporting ring 36 below the sealing ring 4, the mandrel 40 is removed from the socket end by means of the gear 37, Figure 2 clearly shows in which manner it is ensured that parts 29 compress the sealing ring in the right manner, thus enabling said sealing ring to easily slide over the supporting ring 36.

It is to be noted that the deforming member 10 and the rubber folded thereabout, may pass the flat sides 9 in an unhampered manner, but after part 10a has arrived in its lowermost position, axles 5 and 6 are rotated, said rotation causing the sealing ring 4 to be drawn further inwardly and the rubber of said sealing ring to get clamped between two axles, whereas on the other hand the outside of said sealing ring is tightened or stretched.

The apparatus further comprises control means known per se by means of which the impression of the sealing ring is accomplished at the right moment of time.

It will be obvious from the description that according to the invention the sealing ring during inserting same, may be accurately kept in a plane, being perpendicular to the axis of pipe part 1.

Figure 1 further shows a socket positioning means which comprises a cylinder 32 pushing the abutment 35 forwards so that the socket 2 which has been slid forwards too far, now obtains the correct position. The clamps 15 give the pipe 1 a rigid position whereafter cylinder 12 is withdrawn and abutment 35 disappears towards the lower side. The opening of socket 2 is then free. The socket 2 may obviously be positioned in various manners.

The second mandrel portion 23 serves for receiving the expandable core 26 for expanding the tapering expandable parts 29.

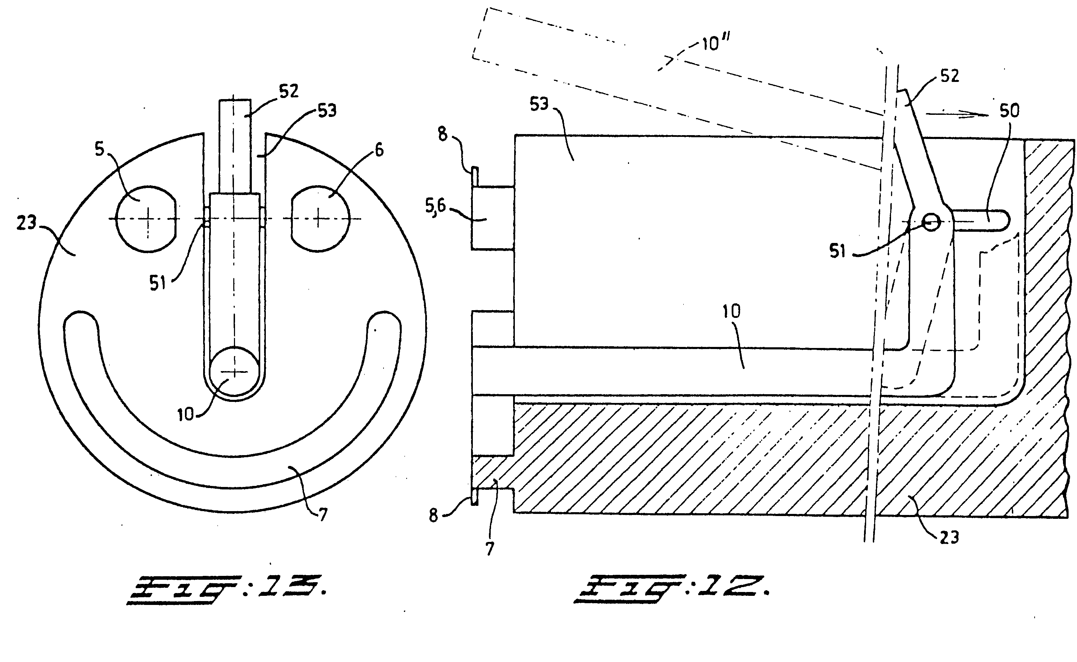

Figures 8 and 9 show an embodiment wherein the axles 5 and 6 are not rotatable but reciprocable by means of rods 41, being displaceable by pivotally attached strips 42 which are movably connected with the piston rod 43.

Figures 10 and 11 (the latter of which shows a cross-section of part of the apparatus as illustrated in fig. 10) show a sealing ring compressing member 44 in the form of a rod. The rod 44 is rotatable about axle 45, a pushing rod 46 being present so as to give the rod 44 a swinging movement. Owing to the swinging movement of rod 44 a sealing ring 4 which would remain partially impressed after having been detached by the axles 5 and 6, can regain its undeformed form and move into the groove chamber 3. The latter is especially of importance when a sealing ring is used which has an outer circumference exceeding the inner circumference of the bottom of the groove chamber.

Very advantageously the socket 2 and the mandrel may be so positioned eccentrically with respect to one another that the sealing ring arrives in the groove chamber through the supporting housing 7.

In an apparatus according to the invention the sealing ring 4 is retained in first instance, while the supporting ring 36 is subsequently located therebelow.

In order to supply sealing rings 4 to the apparatus in accordance with the invention, a vertical feeding channel 48 may be used, which is situated above the endless belt 18 or directly above the hopper 20. A mutual adherence of sealing rings 4 is advantageously prevented by providing the filling channel 48 with two sloping branches 49 for the supply of sealing rings.

Preferably the conveyor belt 25 is gutter-shaped which ensures a supply of sealing rings 4 in a correct position.

Sealing rings 4 may appropriately be provided with a lubricating agent 38 which is supplied by a lubricating agent supplying member. The sealing ring 4 efficiently comprises two lips 4a and 4b.

Figures 12 and 13 show part of an apparatus wherein the deforming member 10 is a rod which moves pivotally around the spindle 51. The rod-shaped deforming member may further be longitudinally displaced by displacing the pivot spindle mechanism in a longitudinal slit 50. A handle 52 may swing the rod-shaped deforming member 10 towards the outside in the position 10'' whilst subsequently after having positioned the sealing ring 4 upon axles 5 and 6 (which now need not be rotatable) said sealing ring is impressed until the latter is tightened or stretched over axles 5 and 6 and curved wall part 7. The deforming member 10 now serves for inserting the ring 4, whereas groove 3 serves as a retaining member for said ring. When the correct position opposite the groove chamber 3 is obtained, the deforming member 10 is drawn towards the right by displacing the pivot mechanism in the longitudinal slit 50 towards the right. The sealing ring 4 is then detached and received at the groove chamber 3. By means of a longitudinal recess 53 in second mandrel part 23 the displacements of the deforming member 10 are effected.

## Claims

1. Process for installing a sealing ring (4) in an annular groove chamber (3) in a cylindrical part, wherein the sealing ring (4) is inwardly deformed thereby decreasing its outer diameter, whereafter the deformed sealing ring (4) is pushed into the cylindrical part and the deformation is subsequently terminated so that the sealing ring is received and left in a groove chamber (3), characterized in that the sealing ring (4) is received and left in a groove chamber (3) in a socket end (2) of a pipe and a supporting ring (36) is slid axially into the tube onto the inner surface of the sealing ring (4) so as to prevent the sealing ring from falling out of the annular groove chamber.

2. Process according to claim 1, characterized in that the sealing ring (4) is provided with a lubricating agent (38).

3. Process according to claim 1 or 2, characterized in that inwardly deformed opposite parts (13, 13') of the sealing ring (4) are pressed against each other, thereby reducing the total thickness of said opposite parts.

4. Process according to any one of claims 1—3, characterized in that after inward deformation the sealing ring (4) is supported by means of whether or not coarse surfaces (5, 6) at both sides of the deformation and said surfaces (5, 6) are rotated for tightening or stretching the sealing ring across said surfaces (5, 6) and another surface (7).

5. Apparatus for executing the process of any one or more of the claims 1 to 4, having a sealing ring retaining member (5, 6, 7) comprising a sealing ring deforming member (10) and supporting means (5, 6, 7) for maintaining a sealing ring in its inwardly deformed position and means for moving the deforming member (10) from an inactive position into an active position and reverse between opposite supporting means (5, 6), characterized in that the apparatus comprises a supporting ring (36) applying member (30, 40) and a pipe socket retaining member (15).

6. Apparatus according to claim 5, characterized in that the apparatus is provided with a lubricating agent applying member for applying lubricating agent onto a sealing ring (4).

7. Apparatus according to claim 5 or 6, characterized in that the supporting means consist of two opposite rotatable axles (5, 6) each of said axles (5, 6) comprising a flat side (9) which flat sides may be placed opposite each other, thereby increasing the distance existing between the cylindrical surfaces of axles (5, 6) when these cylindrical surfaces are put opposite each other and a deforming member (10) is able to pass the space between said flat sides (9).

8. Apparatus according to any one or more of claims 5 to 7, characterized in that the apparatus is provided with a pushing element (44), preferably in the form of a swingably mounted rod (44), for pushing an inwardly deformed part of a sealing ring (4) towards the outside.

9. Apparatus according to any one or more of claims 5—8, characterized in that the supporting ring applying member comprises a tapering plane or plane portions (29) located in front of a supporting ring supporting member, which plane portions in expanded form define a periphery equal to the outer periphery of a supporting ring (36).

10. Apparatus according to any one or more of claims 5—9 characterized in that the apparatus comprises a first mandrel portion (30) being connected with a mandrel (40), which first mandrel portion (30) adjoins said mandrel through an abutment edge (31) and a second mandrel portion (23), expandable tapering portions being located between mandrel portion (23) and mandrel portion (30) which expandable tapering portions (29) may form a tapering surface in their expanded form whereby the periphery of the tapering plane formed by the parts (29) is at least equal to the periphery of a supporting ring (36).

## Patentansprüche

1. Verfharen zum Einsetzen eines Dichtungsringes (4) in eine ringförmige Nutkammer (3) in einem zylindrischen Teil, bei dem der Dichtungsring (4) einwärts verformt und dabei in seinem Außendurchmesser verkleinert wird, woraufhin der verformte Dichtungsring (4) in den zylindrischen Teil geschoben und die Verformung anschließend aufgehoben wird, so daß der Dichtungsring in einer Nutkammer (3) aufgenommen und belassen wird, dadurch gekennzeichnet, daß der Dichtungsring (4) in einer Nutkammer (3) in einem Muffenende (2) eines Rohres aufgenommen und belassen und ein Sützring (36) axial in das Rohr auf die innere Oberfläche des Dichtungsringes geschoben wird, derart, daß ein Herausfallen des Dichtungsringes aus der ringförmigen Nutkammer verhindert wird.

2. Verfahren nach Anspruch 1, dadurch gekennzeichnet, daß der Dichtungsring (4) mit einem Schmiermittel (38) versehen wird.

3. Verfahren nach Anspruch 1 oder 2, dadurch gekennzeichnet, daß einwärts verformte, einander gegenüberliegende Teile (13, 13') des Dichtungsringes (4) gegeneinandergedrückt werden, wodurch die Gesamtdicke der einandergegenüberliegenden Teile verringert wird.

4. Verfahren nach einem der Ansprüche 1 bis 3, dadurch gekennzeichnet, daß der Dichtungsring nach der Einwärtsverformung mittels rauher oder nicht rauher Oberflächen (5, 6) an beiden Seiten der Verformung abgestüzt wird und die genannten Oberflächen (5, 6) zum Straffen oder Strecken des Dichtungsringes über die genannten Oberflächen (5, 6) und eine weitere Oberfläche (7) gedreht werden.

5. Vorrichtung zur Durchführung des Verfahrens nach einem oder mehreren der Ansprüche 1 bis 4, mit einem Dichtungsringhalteglied (5, 6, 7), bestehend aus einem Dichtungsring-Verformungsglied (10) und Stützgliedern (5, 6, 7) zum Halten eines Dichtungsringes in seiner einwärts verformten Stellung und Mitteln zum Bewegen des Verformungsgliedes (10) aus einer unwirksamen Stellung in eine wirksame Stellung und umgekehrt zwischen einander gegenüberliegenden Stützgliedern (5, 6), dadurch gekennzeichnet, daß die Vorrichtung ein Einsetzglied (30, 40) für einen Stützring (36) und ein Rohrmuffenhalteglied (15) umfaßt.

6. Vorrichtung nach Anspruch 5, dadurch gekennzeichnet, daß sie mit einem Schmiermittel-Aufbringungsorgan zum Aufbringen eines Schmiermittels auf einen Dichtungsring (4) versehen ist.

7. Vorrichtung nach Anspruch 5 oder 6, dadurch gekennzeichnet, daß die Stützmittel aus zwei einander gegenüberliegenden drehbaren Achsen (5, 6) bestehen und diese Achsen (5, 6) jeweils eine ebene Seite (9) aufweisen, die einander gegenüberliegend angeordnet werden können, wodurch der vorhandene Abstand zwischen den zylindrischen Oberflächen der Achsen (5, 6) vergrößert wird, wenn diese zylindrischen Oberflächen einander gegenübergestellt sind und ein Verformungsglied (10) durch den Raum zwischen den ebenen Seiten (9) hindurchführbar ist.

8. Vorrichtung nach einem oder mehreren der Ansprüche 5 bis 7, dadurch gekennzeichnet, daß sie mit einem Einschiebglied (44), vorzugsweise in Form einer schwenkbar angebrachten Stange (44), zum Einschieben eines einwärts verformten Teils eines Dichtungsringes (4) zur Außenseite hin versehen ist.

9. Vorrichtung nach einem oder mehreren der Ansprüche 5 bis 8, dadurch gekennzeichnet, daß das Stützring-Einsetzglied eine konische Fläche oder Flächenbereiche (29) vor einem Stützring-Stützglied aufweist, die in aufgeweiteter Form einen Umfang bilden, der gleich dem Außenumfang eines Stützringes (36) ist.

10. Vorrichtung nach einem oder mehreren der Ansprüche 5 bis 9, dadurch gekennzeichnet, daß sie einen mit einem Dorn (40) verbundenen ersten Dornbereich (30), der über einen Widerlagerrand (31) an den Dorn angrenzt, und einen zweiten Dornbereich (23) umfaßt und daß zwischen dem zweiten Dornbereich (23) und dem ersten Dornbereich (30) aufweitbare konische Bereiche (29) angeordnet sind, die eine konische Oberfläche in ihrer aufgeweiteten Form bilden können, bei der der Umfang der von den Bereichen (29) gebildeten konischen Fläche zumindest gleich dem Umfang des Stützringes (36) ist.

**Revendications**

1. Procédé pour le montage d'une bague d'étanchéité (4) dans une chambre annulaire (3) en forme de rainure ménagée dans une pièce cylindrique, procédé selon lequel la bague d'étanchéité (4) est déformée intérieurement, ce qui conduit à une diminution de son diamètre extérieur, puis la bague d'étanchéité (4) ainsi déformée est poussée dans la pièce cylindrique et la déformation est ensuite interrompue de sorte que la bague d'étanchéité est reçue et déposée dans une chambre en forme de rainure (3), caractérisé en ce que la bague annulaire (4) est reçue et déposée dans une chambre (3) en forme de rainure ménagée dans une extrémité femelle (2) d'un tuyau et une bague de support (36) est glissée axialement dans le tube jusqu'à venir sur la surface intérieure de la bague d'étanchéité (4) de façon à empêcher que celle-ci ne sorte de la chambre annulaire en forme de rainure.

2. Procédé selon la revendication 1, caractérisé en ce que la bague d'étanchéité (4) est pourvue d'un agent de lubrification (38).

3. Procédé selon la revendication 1 ou 2, caractérisé en ce que les parties en regard (13, 13') de la bague d'étanchéité (4), qui sont déformées intérieurement sont pressées l'une contre l'autre, l'épaisseur totale desdites parties en regard étant ainsi diminuée.

4. Procédé selon l'une quelconque des revendications 1 à 3, caractérisé en ce qu'après avoir été déformée intérieurement, la bague d'étanchéité (4) est supportée au moyen de surfaces grossières ou non (5, 6), sur les deux côtés soumis à la déformation et lesdites surfaces (5, 6) sont mises en rotation pour tendre ou tirer la bague d'étanchéité à travers lesdites surfaces (5, 6) et une autre surface (7).

5. Appareil par la mise en oeuvre du procédé selon l'une quelconque ou plusieurs des revendications 1 à 4, comportant un élément (5, 6, 7) pour retenir une bague d'étanchéité, qui comprend un organe de déformation de la bague d'étanchéité (10) et des moyens de support (5, 6, 7) pour maintenir une bague d'étanchéité dans sa position de déformation intérieure et des moyens pour déplacer l'organe de déformation (10) d'une position inactive à une position active et inversement entre des moyens de supports se faisant face (5, 6), caractérisé en ce que l'appareil comprend un organe d'application (30, 40) d'une bague de support (36) et un organe (15) pour retenir une emboîture femelle d'un tuyau.

6. Appareil selon la revendication 5, caractérisé en ce que l'appareil est pourvu d'un organe d'application d'un agent de lubrification pour déposer un agent de lubrification sur une bague d'étanchéité (4).

7. Appareil selon la revendication 5, ou 6, caractérisé en ce que les moyens de support comprennent deux axes rotatifs (5, 6) se faisant face, chacun desdits axes (5, 6) présentant une face plane (9), lesquelles faces planes peuvent être placées en regard l'une de l'autre, ce qui a pour conséquence d'augmenter la distance existant entre les surfaces cylindriques des axes (5, 6) quand ces surfaces cylindriques sont mises face-à-face et un organe de déformation (10) est capable de traverser l'espace séparant lesdites faces planes (9).

8. Appareil selon l'une quelconque ou plusieurs des revendications 5 à 7, caractérisé en ce que l'appareil comporte un élément poussoir (44), se présentant de préférence sous la forme d'une tige (44) montée à pivotement, pour pousser vers l'extérieur une partie déformée intérieurement d'une bague d'étanchéité (4).

9. Appareil selon l'une quelconque ou plusieurs des revendications 5 à 8, caractérisé en ce que l'organe d'application de la bague de support comprend un plan conique ou des pièces planes (29) situés en face d'un élément de support d'une bague de support, ces pièces planes définissant, lorsqu'elles sont déployées, une surface périphérique égale à la surface périphérique extérieure d'une bague de support (36).

10. Appareil selon l'une quelconque ou plusieurs des revendications 5 à 9, caractérisé en ce que l'appareil comprend un premier élément de mandrin (30) fixé à un mandrin (40), ce premier élément de mandrin (30) étant adjoint audit mandrin au travers d'un bord formant butée (31) et un second élément de mandrin (23), les pièces conique (29), aptes à être déployées étant placées entre l'élément de mandrin (23) et l'élément de mandrin (30) et pouvant former une surface conique sous leur forme déployée, la surface périphérique du plan conique ainsi formé par les pièces (29) étant au moins égale à la surface périphérique d'une bague de support (36).

FIG:2.

FIG:7.

0017 299

FIG.1.

0017299

FIG. 3.

FIG. 5.

0017299

0017299

Fig:4.

Fig:6.

Fig.8.

Fig.9.

Fig. 11.

Fig. 10.

0017 299

0017 299

_Fig:13._

_Fig:12._